# EUROPÄISCHE PATENTSCHRIFT

(11) **EP 0 799 521 B1**
(45) Veröffentlichungstag und Bekanntmachung des Hinweises auf die Patenterteilung: **13.10.1999**
(21) Anmeldenummer: 95937783.9
(22) Anmeldetag: 21.11.1995
(51) Int. Cl.: H02M 3/158, H05B 41/38, H05B 41/29

(54) **STROMVERSORGUNGSSCHALTUNG**
POWER SUPPLY CIRCUIT
CIRCUIT D'ALIMENTATION EN COURANT

(30) Priorität: 24.12.1994 DE 4446532
(43) Veröffentlichungstag der Anmeldung: 08.10.1997
(73) Patentinhaber: ROBERT BOSCH GMBH, 70442 Stuttgart (DE)
(72) Erfinder: PREIS, Karl-Heinrich, D-77830 Bühlertal (DE); KERN, Robert, D-77887 Sasbachwalden (DE); SUTTER, Joerg, D-76571 Gaggenau (DE)
(86) Internationale Anmeldenummer: DE9501618
(87) Internationale Veröffentlichungsnummer: WO9620527

(56) Entgegenhaltungen:
- DE-A- 4 304 384
- US-A- 4 574 223

## Beschreibung

### Stand der Technik

Die Erfindung geht aus von einer Stromversorgungsschaltung nach der Gattung des unabhängigen Anspruchs. Aus der EP-A 0 580 198 ist eine getaktete Stromversorungsschaltung bekannt, die eine an einem ersten Ausgang in Bezug auf Schaltungsmasse eine erste Ausgangsspannung und die an einem zweiten Ausgang in Bezug auf die Schaltungsmasse eine zweite Ausgangsspannung bereitstellt. Die zweite Ausgangsspannung wird in einer Zusatzschaltung aus einer an einem Verbindungspunkt innerhalb eines Schaltreglers auftretenden Wechselgröße gewonnen. Die an den Ausgängen auftretenden Ausgangsspannungen weisen jeweils dieselbe Polarität auf. An beiden Ausgängen können separate elektrische Lasten angeschlossen werden, die zwischen jeweils den Ausgängen und der Schaltungsmasse anzuschließen sind.

In der Veröffentlichung zu einer Fachtagung, der IEEE Power Electronics Specialists Conference in Palo Alto, Californien, die vom 14. bis 16. Juni 1977 stattgefunden hat, ist ein Gleichspannungswandler beschrieben, der einer Kombination aus einem Aufwärts- und Abwärtswandler entspricht. Bei der vorbekannten Stromversorgungsschaltung ist die positive Klemme einer Eingangs-Gleichspannungsquelle an einer ersten Spule angeschlossen. Die erste Spule liegt an einem ersten Kondensator. Ein Halbleiter-Leistungsbauelement schaltet abwechselnd den Verbindungspunkt der ersten Spule mit dem ersten Kondensator und den Verbindungspunkt des ersten Kondensators mit einer zweiten Spule an einen gemeinsamen Punkt, der zwischen der Eingangs- Gleichspannungsquelle und einer Last liegt. Die zweite Spule liegt in Serie zur Last. Parallel zur Last ist zur Glättung ein zweiter Kondensator geschaltet. Das Halbleiter-Leistungsbauelement kann realisiert werden durch einen an der ersten Spule angeschlossenen Transistor und durch eine an der zweiten Spule angeschlossene Diode, wobei sowohl der Transistor als auch die Diode an dem gemeinsamen Punkt zwischen der Eingangs-Gleichspannungsquelle und der Last geschaltet sind.

Durch ein entsprechendes Ansteuern des wenigstens einen Halbleiter-Leistungsbauelements können die vorzugebende Ausgangsspannung oder der vorzugebende Ausgangsstrom innerhalb gewisser Grenzen variiert werden. Ein großer vorzugebender Bereich bringt den Nachteil mit, daß der Wirkungsgrad der Stromversorgungsschaltung in Teilbereichen absinkt. Weiterhin muß mit der Erhöhung der Erzeugung von elektromagnetischer Störstrahlung zumindest in Teilbereichen gerechnet werden.

### Vorteile der Erfindung

Die erfindungsgemäße Stromversorgungsschaltung weist den Vorteil auf, daß die einer Last zur Verfügung gestellte Spannung oder der zur Verfügung gestellte Strom in einem weitem Bereich liegen können.

Ein Schaltregler stellt an einem ersten Ausgang eine in einem ersten Spannungsbereich liegende Ausgangsspannung durch einen Schaltbetrieb wenigstens eines Halbleiter-Leistungsbauelements bereit. Eine Zusatzschaltung stellt aus einer innerhalb des Schaltreglers auftretenden Wechselgröße an einem zweiten Ausgang eine in einem zweiten Ausgangspannungsbereich liegende Ausgangsspannung bereit, wobei beide Ausgangsspannungen unterschiedliche Polarität in bezug auf eine Schaltungsmasse aufweisen.

Eine gemeinsame Last ist zwischen dem ersten Ausgang und einem gemeinsamen Ausgang angeschlossen. Der gemeinsame Ausgang ist über eine Entkopplungsdiode mit dem zweiten Ausgang der Zusatzschaltung einerseits und über eine Entkopplungsdiode mit Masse andererseits verbunden.

Anstelle der Festlegung der beiden Ausgangsspannungen kann gleichermaßen die Festlegung von zwei Ausgangsströmen unterschiedlicher Polarität vorgesehen sein, wobei der Innenwiderstand der Last die Spannung festlegt. Die Festlegung entweder der Spannungen oder der Ströme beeinhaltet in dem Fall, daß an dem Ausgang, an dem eine höhere Spannung anliegt, ein kleinerer Strom zur Verfügung steht.

Der wesentliche Vorteil der erfindungsgemäßen Stromversorgungsschaltung liegt in der einfachen Realisierungsmöglichkeit, die durch die Mehrfachausnutzung von elektrischen Komponenten gegeben ist, die ohnehin im Schaltregler mit dem ersten Ausgang vorhanden sind. Die Auskopplung einer Wechselgröße für die Zusatzschaltung ist bei sämtlichen Wandlertypen möglich. Zumindest das Halbleiter-Bauelement des Schaltreglers kann in der Zusatzschaltung eingespart werden.

Aufgrund der wahlfreien Realisierungsmöglichkeiten kann die erfindungsgemäße Stromversorgungsschaltung an die Forderungen nach den unterschiedlichen Ausgangsspannungs- oder Ausgangsstrombereichen sowie hinsichtlich der zur Verfügung zu stellenden Energie angepaßt werden.

Vorteilhafte Weiterbildungen und Ausgestaltungen der in den unabhängigen Ansprüchen angegebenen Stromversorgungsschaltung ergeben sich aus abhängigen Ansprüchen.

Die innerhalb des Schaltreglers abgeleitete Wechselgröße für die Zusatzschaltung wird vorzugsweise an einem induktiven Bauelement des Schaltreglers abgegriffen. An einem induktiven Bauelement treten gegebenenfalls höhere Spannungssprünge auf, als beispielsweise an dem Halbleiter-Leistungsbauelement. Eine zusätzliche Drossel zur Begrenzung des in die Zusatzschaltung abgegebenen Stroms kann deshalb bei geeigneter Schaltungsauslegung entfallen.

Eine vorteilhafte Weiterbildung sieht eine Abschaltmöglichkeit der Zusatzschaltung vor. Eine Abschaltung kann vorgenommen werden, wenn die erhöhte Spannung zum Versorgen eines angeschlossenen Verbrauchers nicht mehr benötigt wird. Das Abschalten erhöht den Wirkungsgrad der Stromversorgungsschaltung durch Wegfall der Verluste in der Zusatzschaltung.

Eine Ausgestaltung dieser Weiterbildung sieht das Abschalten der Zusatzschaltung in Abhängigkeit von der am gemeinsamen Ausgang vorliegenden Spannung vor. Die Ausgangsspannung wird in einem Komparator mit einem vorgegebenen Schwellenwert verglichen. Bei einer Schwellenüberschreitung öffnet ein Abschaltsignal einen elektromechanischen oder einen Halbleiterschalter. Vorzugsweise ist ein Transistor zum Abschalten der Zusatzschaltung vorgesehen, dessen Schaltstrecke in Reihe zum zweiten Ausgang der erfindungsgemäßen Stromversorgungsschaltung geschaltet ist.

Die erfindungsgemäße Stromversorgungsschaltung ist insbesondere geeignet zur Energieversorgung von elektrischen Lasten, die einen variablen Innenwiderstand aufweisen. Eine derartige Last ist beispielsweise eine Gasentladungslampe, bei der der Zusammenhang zwischen der angelegten Spannung und dem Lampenstrom nichtlinear ist. Zum Zünden und Betreiben von Gasentladungslampen werden verschiedene Spannungen benötigt. Zum Zünden der Gasentladungslampe wird ein Hochspannungsimpuls benötigt, der in Abhängigkeit vom Lampenfülldruck bis zu mehreren Kilovolt betragen kann. Kurz nach dem Zünden benötigt die Gasentladungslampe eine Übernahmespannung, die höher liegt als die nachfolgende Brennspannung. In der Übergangsphase wird das Lampenplasma, ausgehend von einem Zündfunkenkanal, aufgebaut. Die Übernahmespannung kann um einen Faktor 10 oberhalb der Brennspannung liegen. Die erfindungsgemäße Stromversorgungsschaltung ist insbesondere geeignet zum Bereitstellen sowohl der Übernahme spannung als auch der Brennspannung. Die von der Zusatzschaltung gegebene Spannung entspricht der Übernahmespannung und die vom Schaltregler abgegebene Spannung der nachfolgenden Brennspannung. Die von der Zusatzschaltung zur Verfügung gestellte höhere zweite Spannung kann zur Energieversorgung einer separaten Zündschaltung vorgesehen sein. Das höhere Spannungsniveau bringt dort den Vorteil mit sich, daß das in der Zündschaltung vorzusehende Übersetzungsverhältnis geringer ausfallen kann.

Die von der erfindungsgemäßen Stromversorgungsschaltung bereitgestellte Gleichspannung wird vorzugsweise in einem nachgeschalteten Wechselrichter in eine Wechselspannung umgewandelt, die zum Betreiben einer Gasentladungslampe geeigneter ist als eine Gleichspannung.

Weitere vorteilhafte Weiterbildungen und Ausgestaltungen der erfindungsgemäßen Stromversorgungsschaltung ergeben sich aus weiteren abhängigen Ansprüchen und aus der folgenden Beschreibung.

### Zeichnung

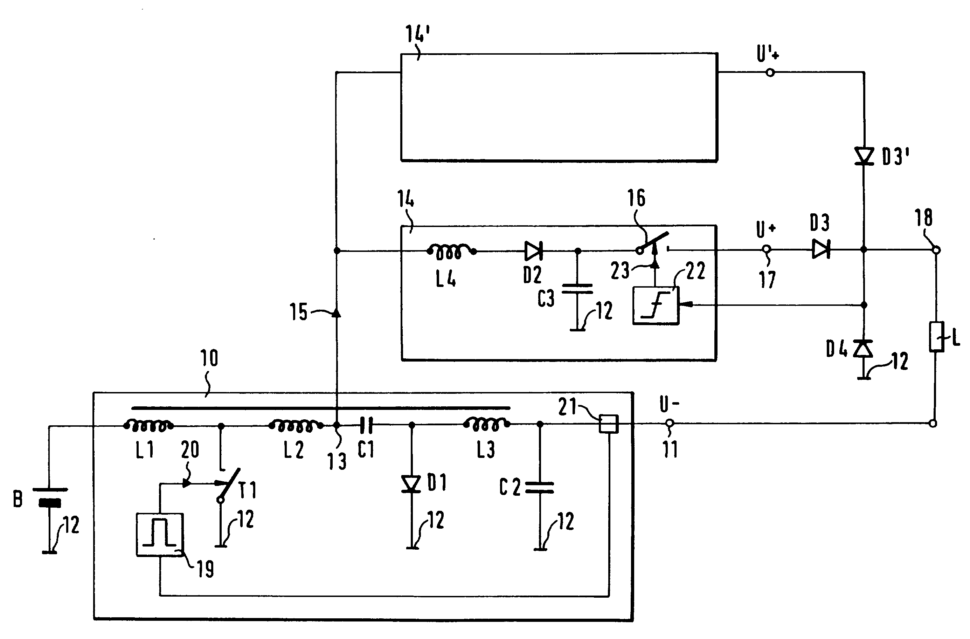

Die Figur zeigt ein Schaltbild einer erfindungsgemäßen Stromversorgungsschaltung.

Ein in der Figur gezeigter Schaltregler 10 stellt an einem ersten Ausgang 11 eine erste Ausgangsspannung U- bereit. Die Energie wird von einer Energiequelle B bereitgestellt. Die Spannungen der erfindungsgemäßen Stromversorgungsschaltung sind auf eine Masse 12 bezogen.

Die an Masse 12 angeschlossene Energiequelle B ist mit einer ersten Spule L1 verbunden. Der andere Anschluß der ersten Spule L1 ist über einen ersten Transistor T1 mit Masse 12 verbindbar. Sowohl die erste Spule L1 als auch der erste Transistor T1 sind über eine zweite Spule L2 an einem Verbindungspunkt 13 angeschlossen, an den ein erster Kondensator C1 geführt ist. Die erste und zweite Spule L1, L2 sind transformatorisch gekoppelt. Das andere Ende des ersten Kondensators C1 ist über eine erste Diode D1 einerseits mit Masse 12 und über eine dritte Spule L3 andererseits mit dem ersten Ausgang 11 verbunden. Zwischen dem ersten Ausgang 11 und Masse 12 ist ein zweiter Kondensator C2 geschaltet.

Eine in einer Zusatzschaltung 14 enthaltene vierte Spule L4 ist am Verbindungspunkt 13 des Schaltreglers 10 angeschlossen. Eine am Verbindungspunkt 13 innerhalb des Schaltreglers 10 auftretende Wechselgröße 15 kann somit der Zusatzschaltung 14 zugeführt werden. Die Wechselgröße 15 gelangt über die vierte Spule L4, über eine zweite Diode D2 und über einen zweiten Transistor 16 zu einem zweiten Ausgang 17, der dem Ausgang der Zusatzschaltung 14 entspricht. An der Verbindung zwischen der zweiten Diode D2 und dem zweiten Transistor 16 ist ein gegen Masse 12 geschalteter dritter Kondensator C3 geschaltet. Am zweiten Ausgang 17 tritt eine zweite Ausgangsspannung U+ auf.

Der erste Ausgang 11 und der zweite Ausgang 17 liegen an einem gemeinsamen Ausgang 18, an dem eine Last L angeschlossen ist. Die beiden Ausgänge 11, 17 sind mittels einer dritten und vierten Diode D3, D4 voneinander entkoppelt. Die dritte Diode D3 verbindet den zweiten Ausgang 17 mit dem gemeinsamen Ausgang 18. Die vierte Diode D4 ist vom gemeinsamen Ausgang 18 gegen Masse 12 geschaltet. Die Last L liegt zwischen dem gemeinsamen Ausgang 18 und dem ersten Ausgang 11.

Zum Schalten des ersten, im Schaltregler 10 enthaltenen Transistors T1 ist eine Steuerschaltung 19 vorgesehen, die ein erstes Steuersignal 20 in Abhängigkeit von dem in den ersten Ausgang 11 fließenden Strom bereitstellt. Der Strom wird von einem Stromsensor 21 erfaßt.

Zum Betätigen des in der Zusatzschaltung 14 enthaltenen Schalttransistors 16 ist ein Komparator 22 vorgesehen, der ein zweites Steuersignal 23 abgibt. Der Komparator 22 vergleicht die am gemeinsamen Ausgang 18 liegende Spannung mit einem vorgegebenen Schwellenwert.

Die Wechselgröße 15 kann weiteren Zusatzschaltungen 14' zugeführt sein, die entsprechende Ausgangsspannungen U'+ bereitstellen und über weitere Dioden D3' auf den gemeinsamen Ausgang 18 koppeln.

Die erfindungsgemäße Stromversorgungsschaltung arbeitet folgendermaßen:

Der Schaltregler 10 stellt am ersten Ausgang 11 die erste Ausgangsspannung U- bereit, die im gezeigten Ausführungsbeispiel negativ ist gegenüber der Spannung der Energiequelle B, bezogen auf Masse 12. Zunächst ist angenommen, daß der erste Transistor T1 geschlossen ist. Die erste Spule L1 liegt dadurch an der Energiequelle B. Es beginnt ein Strom in der ersten Spule L1 zu fließen, die eine entsprechende magnetische Energie speichert. Nach dem Öffnen des ersten Transistors T1 kommutiert der zuvor durch den ersten Transistor fließende Strom auf die zweite Spule L2 und lädt den ersten Kondensator C1 über die leitende erste Diode D1.

Nach dem Schließen des ersten Transistors T1 liegt die erste Spule L1 wieder an der Eingangsspannung, während der erste Kondensator C1 über die zweite Spule L2 und den ersten Transistor T1 auf einer negativen Spannung liegt, die abhängt von dem Übersetzungsverhältnis zwischen der ersten und zweiten Spule L1, L2, die einen Transformator bilden. An der ersten Diode D1 liegt jetzt eine negative Spannung, so daß diese sperrt. Der zweite Kondensator C2 liegt über die dritte Spule L3 an dieser negativen Spannung. Die in der dritten Spule L3 induzierte Spannung hängt vom Übersetzungsverhältnis zwischen der ersten Spule L1 und der dritten Spule L3 ab, die einen (Teil-)Transformator bilden. Die sich am ersten Ausgang 11 ergebende erste Ausgangsspannung U- weist einen vorgebbaren Wert auf, der von einem in der Figur nicht gezeigten Sensor erfaßt und der Steuerschaltung 19 zugeführt werden kann. Die Steuerschaltung 19 schaltet den ersten Transistor T1 mit dem ersten Steuersignal 20 derart, daß beispielsweise die erste Ausgangsspannung auf den vorgegebenen Wert geregelt wird. Anstelle der Regelung auf einen vorgegebenen Wert der ersten Ausgangsspannung U- kann gleichermaßen eine Stromregelung vorgesehen sein, wobei die erste Ausgangsspannung U- in einem ersten vorgebbaren Spannungsbereich liegt, während der am ersten Ausgang 11 zur Verfügung gestellte Ausgangsstrom auf einen vorgegebenen Wert geregelt wird. In der Figur ist beispielhaft die Stromregelung angenommen, wobei der durch den ersten Ausgang 11 fließende Strom vom Stromsensor 21 erfaßt wird. Der Stromsensor 21 ist beispielsweise ein Serienwiderstand, der einen geringen ohmschen Widerstand aufweist, oder beispielsweise ein magnetfeldempfindliches Element, welches das einen stromdurchflossenen Leiter umgebende Magnetfeld erfaßt.

Weitere und detailliertere Angaben zur Funktionsweise des Schaltreglers 10 sind in dem eingangs beschriebenen Stand der Technik, der Veröffentlichung der Tagungsberichte, enthalten, auf die hier ausdrücklich Bezug genommen wird.

Erfindungsgemäß ist die wenigstens eine Zusatzschaltung 14, 14' vorgesehen, die aus der Wechselgröße 15, welche innerhalb des Schaltreglers 10 auftritt, am zweiten Ausgang 17 eine zweite Ausgangsspannung U+, U'+ zur Verfügung stellt. Die Wechselgröße 15 wird am Verbindungspunkt 13 abgegriffen, der zwischen der zweiten Spule L2 und dem ersten Kondensator C1 liegt. Am Verbindungspunkt 13 treten Spannungssprünge auf, die von positiven bis zu negativen Spannungen, bezogen auf die Masse 12 liegen können. Die Wechselgröße 15, im gezeigten Ausführungsbeispiel eine wenigstens näherungsweise rechteckförmige Spannung, führt in der vierten Spule L4 der Zusatzschaltung 14 zu einem Stromfluß, sofern die zweite Diode D2 der Zusatzschaltung 14 mit einer Polarität beaufschlagt wird, bei der sie leitet.

Im gezeigten Ausführungsbeispiel enthält die Zusatzschaltung 14, 14' keine weiteren Maßnahmen zur Regelung der zweiten Ausgangsspannung U+, U'+. Die Regelung erfolgt ausschließlich über den ersten Transistor T1 des Schaltreglers 10. Gegebenenfalls kann die Zusatzschaltung 14 eine entsprechende Spannungsstabilisierung zusätzlich enthalten. Anstelle der im Ausführungsbeispiel angenommenen Festlegung der zweiten Ausgangsspannung U+, U'+ kann gleichermaßen eine Festlegung des durch den zweiten Ausgang 17 fließenden Stroms entsprechend der Ausgestaltung des Schaltreglers 10 vorgesehen sein.

Erfindungswesentlich ist weiterhin die Zusammenführung des ersten und zweiten Ausgangs 11, 17 über die dritte, vierte und weitere Dioden D3, D3', D4 zum gemeinsamen Ausgang 18. Im gezeigten Ausführungsbeispiel liegt die Last L zwischen dem ersten Ausgang 11 und dem gemeinsamen Ausgang 18. Diese Anordnung der Last L ist möglich, wenn angenommen wird, daß die am ersten Ausgang liegende erste Ausgangsspannung U-negativ gegen Masse 12 ist, wenn die am zweiten Ausgang 17 liegende zweite Ausgangsspannung U+, U'+ positiv gegen Masse 12 ist, wenn der Anodenanschluß der dritten Diode D3, D3' am zweiten Ausgang 17 und der Katodenanschluß am gemeinsamen Ausgang 18 und wenn der Anodenanschluß der vierten Diode D4 an Masse 12 und der Katodenanschluß am gemeinsamen Ausgang 18 liegt. Unter diesen Voraussetzungen muß die zweite Ausgangsspannung U⁺ betragsmäßig nicht höher liegen als die erste Ausgangsspannung U-. Die zweite Ausgangsspannung U+, U'+ liegt lediglich bezogen auf Masse 12 vorzeichenrichtig höher als die erste Ausgangsspannung U-.

Anstelle der im Ausführungsbeispiel gezeigten Festlegung der beiden Ausgangsspannungen U+, U'+; U' sowie die Zusammenführung über die Dioden D3, D3'; D4 zum gemeinsamen Ausgang 18 kann gleichermaßen eine Anordnung vorgesehen sein, wobei die Anodenanschlüsse der Dioden D3, D3'; D4 jeweils an den Ausgängen 11, 17 liegen und die Katoden der Dioden D3, D3'; D4 zum gemeinsamen Ausgang 18 führen.

An die Last 11 geschaltet ist in jedem Fall entweder der Schaltregler 10 oder die Zusatzschaltung 16 in Abhängigkeit davon, welche Ausgangsspannung U+, U'+; U- in Bezug auf Masse 12 höher liegt. Bei einem Umpolen der Dioden D3, D3'; D4 liegen die Verhältnisse jeweils umgekehrt.

Eine vorteilhafte Weiterbildung sieht den Einsatz des zweiten Transistors 16 vor, der vom zweiten Steuersignal 23 angesteuert wird, das der Komparator 22 abgibt. Der Komparator 22 vergleicht die am gemeinsamen Ausgang 18 auftretende Spannung mit einem fest vorgegebenen Schwellenwert. Sinn diese Maßnahme ist es, die Zusatzschaltung 14 in Abhängigkeit von der am gemeinsamen Ausgang 18 liegenden Spannung ein- oder auszuschalten. Ein Abschalten erhöht den Wirkungsgrad der gesamten Anordnung aus Schaltregler 10 und Zusatzschaltung 14. Die Wirkungsgraderhöhung folgt daraus, daß der Energieabzug aus dem Schaltregler 10 über die Wechselgröße 15 bei abgeschalteter Zusatzschaltung 14 entfällt.

Die erfindungsgemäße Schaltungsanordnung ist insbesondere zum Versorgen einer Last L mit Energie vorgesehen, die einen variablen Spannungsversorgungsbereich aufweist. Eine derartige Last L ist beispielsweise eine Gasentladungslampe. Nach dem Zünden einer solchen Lampe muß zunächst der Übergang zu einem stabilen Brennbetrieb erreicht werden. In dieser Übergangsphase, die sich unmittelbar an den Zündvorgang anschließt, wird eine erhöhte Spannung bei einem vergleichsweise geringen Strom benötigt. Die Bereitstellung der erhöhten Spannung bei einem geringeren Strom kann von der Zusatzschaltung 14, 14' übernommen werden. Die zweite Ausgangsspannung U+, U'+ wird daher auf einen Wert festgelegt, der für die gestellte Aufgabe ausreicht. Der im Vergleich zum Brennbetrieb der Lampe geringere Strom macht die Ausgestaltung der Zusatzschaltung 14 als Sperrwandler möglich. Während dieser Phase braucht der Schaltregler 10 zunächst keine Energie am ersten Ausgang 11 zur Verfügung zu stellen. Im gezeigten Ausführungsbeispiel, bei dem die Last L am ersten Ausgang 10 unmittelbar angeschlossen ist, fließt der von der Zusatzschaltung 14, 14' abgegebene Strom gleichfalls durch den ersten Ausgang 11. Die erste Ausgangsspannung U- addiert sich daher bei diesen Ausführungsbeispiel unmittelbar zur zweiten Ausgangsspannung U+, U'+, sofern der durch die Last L fließende Strom von der Zusatzschaltug 14 nicht mehr aufgebracht werden kann, kommutiert die Energieversorgung der Last L vollständig auf den Schaltregler 10. Im beschriebenen Ausführungsbeispiel mit der Gasentladungslampe als Last L bedeutet dies, daß die erste Ausgangsspannung U- die Brennspannung der Lampe bildet, wobei der Lampenbetriebsstrom ausschließlich vom Schaltregler 10 über den ersten Ausgang 11 zur Vefügung gestellt wird, der über die Lampe und die vierte Diode D4 von Masse 12 zum ersten Ausgang 11 fließt. Die Spannung am gemeinsamen Ausgang 18 ist in diesem Betriebszustand der Lampe von zunächst positiven Werten bezogen auf Masse 12 abgesunken auf einen geringen negativen Wert, der von der Durchlaßspannung der vierten Diode D4 abhängt. Das Unterschreiten der Spannung am gemeinsamen Ausgang 14 eines vorgegebenen Grenzwertes stellt der Komparator 22 fest, der die Ausgangsspannung am gemeinsamen Ausgang 18 mit einem fest vorgegebenen Schwellenwert vergleicht. Nach dem Erreichen des stabilen Brennbetriebs der Lampe wird der zweite Transistor 16 geöffnet und die Zusatzschaltung 14 somit abgeschaltet.

Die Spannungsfestlegung gemäß Ausführungsbeispiel weist im Hinblick auf die als Last L vorgeschlagene Gasentladungslampe den Vorteil auf, daß die Gasentladungslampe in bezug auf Masse 12 im wesentlichen mit einem negativen Potential betrieben wird, das eine schädliche Ionenwanderung innerhalb der Gasentladungslampe in den Lampenkörper verhindert. Ein Betreiben der als Last L vorgesehenen Gasentladungslampe mit der im Ausführungsbeispiel angenommenen Gleichspannung würde im allgemeinen zu einem raschen Verschleiß der Elektroden führen. Vorzugsweise ist daher am gemeinsamen Ausgang 18 ein Wechselrichter angeschlossen, der, bezogen auf die Lampelelektroden, eine Wechselspannung erzeugt. Als Last L kann beispielsweise eine vorzugsweise metalldotierte Hochdruck-Gasentladungslampe vorgesehen sein, die insbesondere geeignet ist für den Einsatz als Scheinwerferlampe in einem Kraftfahrzeug. Die Brennspannung einer solchen Lampe, die vom Schaltregler 10 als erste Ausgangsspannung U- bereitgestellt wird, liegt etwa bei 100 Volt. Der dabei fließende Strom von etwa 350 Milliampère legt die Lampenleistung fest, auf die vorzugsweise geregelt wird. Die geregelte Größe ist beispielsweise der durch die Lampe fließende Strom, der vom Stromsensor 21 erfaßt wird. Der Strom wird so lange nachgeregelt, bis die vorgegebene Lampenleistung erreicht ist. Die von der Zusatzschaltung 14, 14' bereitgestellte zweite Ausgangsspannung U+, U'+, die unmittelbar nach dem Zünden der Lampe benötigt wird, liegt beispielsweise bei 500 bis 1000 Volt, wobei der Strom lediglich einige 10 Milliampère beträgt. Bei diesem Ausführungsbeispiel mit der Gasentladungslampe als Last L ist eine Regelung weder des Stroms noch der Spannung am zweiten Ausgang 17 der Zusatzschaltung 14, 14' erforderlich.

Der Einsatz von mehreren Zusatzschaltungen 14, 14', die jeweils eine Ausgangsspannung U+, U'+ abgeben, die in unterschiedlichen Bereichen liegen, ermöglicht eine weitere Aufteilung der für die Last L benötigten Spannung, verbunden mit einer weiteren Wirkungsgraderhöhung. Die weiteren Zusatzschaltungen 14' sind beispielsweise entsprechend der Zusatzschaltung 14 realisiert.

## Patentansprüche

1. Stromversorgungsschaltung zum Bereitstellen einer Gleichspannung oder eines Gleichstroms, mit einem Schaltregler (10), der an einem ersten Ausgang (11) eine in bezug auf eine Masse (12) erste Ausgangsspannung (U-) durch einen Schaltbetrieb wenigstens eines Schaltelements (T1) bereitstellt, mit wenigstens einer Zusatzschaltung (14, 14'), die aus einer an einem Verbindungspunkt (13) innerhalb des Schaltreglers (10) auftretenden Wechselgröße (15) an einem zweiten Ausgang (17) eine in bezug auf Masse (12) zweite Ausgangsspannung (U+, U`+) bereitstellt, dadurch gekennzeichnet, daß die Polarität der ersten Ausgangsspannung (U-) entgegengesetzt ist zu der Polarität der zweiten Ausgangsspannung (U+, U`+), daß eine Last (L) zwischen dem ersten Ausgang (11) und einem gemeinsamen Ausgang (18) angeschlossen ist, daß der gemeinsame Ausgang (18) über eine Entkopplungsdiode (D4) mit Masse (12) und über eine Entkopplungsdiode (D3, D3') mit dem zweiten Ausgang (17) verbunden ist.

2. Stromversorgungsschaltung nach Anspruch 1, dadurch gekennzeichnet, daß an dem im Schaltregler (10) liegenden Verbindungspunkt (13) wenigstens eine Spule (L2) angeschlossen ist.

3. Stromversorgungsschaltung nach Anspruch 1, dadurch gekennzeichnet, daß der Schaltregler (10) als Durchflußwandler und die Zusatzschaltung (14) als Sperrwandler arbeitet.

4. Stromversorgungsschaltung nach Anspruch 1, dadurch gekennzeichnet, daß die Zusatzschaltung (14) abschaltbar ist.

5. Stromversorgungsschaltung nach Anspruch 4, dadurch gekennzeichnet, daß die Zusatzschaltung (14) in Abhängigkeit von der am gemeinsamen Ausgang (18) liegenden Spannung, die ein Komparator (22) mit einem vorgegebenen Schwellenwert vergleicht, abschaltbar ist.

6. Stromversorgungsschaltung nach Anspruch 1, dadurch gekennzeichnet, daß eine mit Energie zu vesorgende Last (L) am ersten Ausgang (11) des Schaltreglers (10) und am gemeinsamen Ausgang (18) angeschlossen ist.

7. Stromversorgungsschaltung nach Anspruch 1, dadurch gekennzeichnet, daß der am ersten Ausgang (11) des Schaltreglers (10) zur Verfügung gestellte Ausgangsstrom auf einen vorgegebenen Wert geregelt ist.

8. Stromversorgungsschaltung nach Anspruch 1, dadurch gekennzeichnet, daß die am zweiten Ausgang (17) der Zusatzschaltung (14, 14') liegende zweite Ausgangsspannung (U+, U'+) einen positiveren Wert aufweist, als die am ersten Ausgang (11) des Schaltreglers (10) auftretende erste Ausgangsspannung (U-) .

9. Stromversorgungsschaltung nach Anspruch 1, dadurch gekennzeichnet, daß als eine mit Energie zu versorgende Last (L) eine Gasentladungslampe vorgesehen ist.

10. Stromversorgungsschaltung nach Anspruch 9, dadurch gekennzeichnet, daß die Gasentladungslampe eine metalldotierte Hochdruck-Gasentladungslampe ist.

## Claims

1. Power supply circuit for providing a DC voltage or a DC current, having a switched-mode regulator (10), which, at a first output (11), provides a first output voltage (U-) with respect to an earth (12) by means of a switching mode of at least one switching element (T1), having at least one additional circuit (14, 14'), which, from an alternating quantity (15) occurring at a junction point (13) within the switched-mode regulator (10), provides a second output voltage (U+, U`+) with respect to earth (12) at a second output (17), characterized in that the polarity of the first output voltage (U-) is opposite to the polarity of the second output voltage (U+, U`+), in that a load (L) is connected between the first output (11) and a common output (18), in that the common output (18) is connected to earth (12) via a decoupling diode (D4) and to the second output (17) via a decoupling diode (D3, D3').

2. Power supply circuit according to Claim 1, characterized in that at least one coil (L2) is connected to the junction point (13) situated in the switched-mode regulator (10).

3. Power supply circuit according to Claim 1, characterized in that the switched-mode regulator (10) operates as a forward converter and the additional circuit (14) operates as a flyback converter.

4. Power supply circuit according to Claim 1, characterized in that the additional circuit (14) can be turned off.

5. Power supply circuit according to Claim 4, characterized in that the additional circuit (14) can be turned off as a function of the voltage which is present at the common output (18) and is compared with a predetermined threshold value by a comparator (22).

6. Power supply circuit according to Claim 1, characterized in that a load (L) to be supplied with energy is connected to the first output (11) of the switched-mode regulator (10) and to the common output (18).

7. Power supply circuit according to Claim 1, characterized in that the output current made available at the first output (11) of the switched-mode regulator (10) is regulated to a predetermined value.

8. Power supply circuit according to Claim 1, characterized in that the second output voltage (U+, U'+) present at the second output (17) of the additional circuit (14, 14') has a more positive value than the first output voltage (U-) appearing at the first output (11) of the switched-mode regulator (10).

9. Power supply circuit according to Claim 1, characterized in that a gas discharge lamp is provided as a load (L) to be supplied with energy.

10. Power supply circuit according to Claim 9, characterized in that the gas discharge lamp is a metal-doped high-pressure gas discharge lamp.

## Revendications

1. Circuit d'alimentation en courant pour fournir une tension continue ou un courant continu, comprenant un régulateur de commutation (10) qui fournit à une première sortie (11), une première tension de sortie (U-) par rapport à la masse (12), par un fonctionnement en commutation d'au moins un élément de commutation (T1), avec au moins un circuit complémentaire (14, 14') qui fournit à partir d'une grandeur alternative (15) produite au point de liaison (13) du régulateur de commutation (10), à la seconde sortie (17), une seconde tension de sortie (U+, U'+) par rapport à la masse (12),
caractérisé en ce que
- la polarité de la première tension de sortie (U-) est opposée à celle de la seconde tension de sortie (U+, U'+),
- une charge (L) est branchée entre la première sortie (11) et une sortie commune (18),
- la sortie commune (18) est reliée à la masse (12) par une diode de découplage (D4) et à la seconde sortie (17) par une diode de découplage (D3, D3').

2. Circuit d'alimentation en courant selon la revendication 1,
caractérisé en ce qu'
au moins une bobine (L2) est reliée au point de commutation (13) situé dans le régulateur de commutation (10).

3. Circuit d'alimentation en courant selon la revendication 1,
caractérisé en ce que
le régulateur de commutation (10) fonctionne en convertisseur de passage, et le circuit complémentaire (14) fonctionne en convertisseur de blocage.

4. Circuit d'alimentation en courant selon la revendication 1,
caractérisé en ce que
le circuit complémentaire (14) peut être coupé.

5. Circuit d'alimentation en courant selon la revendication 4,
caractérisé en ce que
le circuit complémentaire (14) peut être coupé en fonction de la tension appliquée à la sortie commune (18), tension qu'un comparateur (22) compare à un seuil prédéterminé.

6. Circuit d'alimentation en courant selon la revendication 1,
caractérisé par
une charge (L) qui demande de l'énergie, reliée à la première sortie (11) du régulateur de commutation (10) et à la sortie commune (18).

7. Circuit d'alimentation en courant selon la revendication 1,
caractérisé en ce que
le courant de sortie fourni à la première sortie (11) du régulateur de commutation (10), est régulé sur une valeur prédéterminée.

8. Circuit d'alimentation en courant selon la revendication 1,
caractérisé en ce que
la seconde tension de sortie (U+, U'+) appliquée à la seconde sortie (17) du circuit complémentaire (14, 14') présente une valeur plus positive que la première tension de sortie (U-) appliquée à la première sortie (11) du régulateur de commutation (10).

9. Circuit d'alimentation en courant selon la revendication 1,
caractérisé en ce que
la charge (L) qui demande de l'énergie, est une lampe à décharge de gaz.

10. Circuit d'alimentation en courant selon la revendication 9,
caractérisé en ce que
la lampe à décharge de gaz est une lampe à décharge de gaz à haute pression et à dopage métallique.
